**Europäisches Patentamt**

**European Patent Office**

**Office européen des brevets**

(19)

(11) Veröffentlichungsnummer: **0 268 645**
**B1**

(12) **EUROPÄISCHE PATENTSCHRIFT**

(45) Veröffentlichungstag der Patentschrift: **07.11.90**

(51) Int. Cl.⁵: **C 04 B 20/02, C 04 B 14/30**

(21) Anmeldenummer: **87903682.0**

(22) Anmeldetag: **05.06.87**

(86) Internationale Anmeldenummer:
**PCT/DE87/00262**

(87) Internationale Veröffentlichungsnummer:
**WO 87/07595 17.12.87 Gazette 87/28**

(60) Teilanmeldung 89121450.4 eingereicht am
**05/06/87.**

(54) **VERFAHREN ZUM EINFÄRBEN VON BETON.**

(30) Priorität: **09.06.86 DE 3619363**

(43) Veröffentlichungstag der Anmeldung:
**01.06.88 Patentblatt 88/22**

(45) Bekanntmachung des Hinweises auf die
Patenterteilung:
**07.11.90 Patentblatt 90/45**

(84) Benannte Vertragsstaaten:
**AT BE CH FR GB IT LI LU NL SE**

(56) Entgegenhaltungen:
**FR-A-2 450 273**
**GB-A-1 537 663**
**US-A-2 221 175**
**US-E- 20 776**

(73) Patentinhaber: **Chemische Werke Brockhues AG**
**Mühlstrasse 118**
**D-6229 Walluf (DE)**

(72) Erfinder: **JUNGK, Axel, Ekkehard**
**Kranichstrasse 22 Wohnpark im Teich**
**D-6085 Nauheim (DE)**

(74) Vertreter: **Kuhnen, Wacker & Partner**
**Schneggstrasse 3-5 Postfach 1553**
**D-8050 Freising (DE)**

Courier Press, Leamington Spa, England.

EP 0 268 645 B1

## Beschreibung

Die Erfindung betrifft ein Verfahren zum Einfärben von Beton.

Beton im Sinne dieser Erfindung ist der zementhaltige Werkstoff zur Herstellung von Betonsteinen und Betonplatten, Betondachsteinen, Verbundsteinen, aber auch Faserzement- und/oder Zementmörtel.

Beton ist ein bewährter konstruktiver Baustoff, der in Form von Sichtbeton auch ästhetische Zwecke erfüllt. Die Einfärbung der Betonmasse zur Herstellung von Sichtbeton verleiht diesem eine praktisch wartungsfreie Farbigkeit für viele Jahre.

Dagegen müssen Betonflächen, die durch Anstriche dekoriert wurden, in kurzen Zeitabständen erneuert werden. Eingefärbter Beton wird z.B. in Fassaden, Platten, Pflastersteinen, Dachsteinen, Lärmwällen, Uferbefestigungen, Brücken und ähnlichen Konstruktionen, aber beispielsweise auch zur Dekoration von Fassaden in Form von eingefärbtem Mörtel verwendet.

Beton wird mittels anorganischer und neuerdings organischer Pigmente eingefärbt.

Solche für Beton geeigneten Pigmente, die sich seit langer Zeit bewährt haben, sind z.B. Manganoxyd, Eisenoxyde und Kohlenstoff. Von diesen haben sich insbesondere Pigmente auf Basis von Kohlenstoff bzw. Eisenoxyd in der Praxis gut bewährt.

Die Herstellung des eingefärbten Betons ist jedoch problematisch. Das Pigmentpulver staubt und sein Einsatz verursacht die Verunreinigung von Menschen, Maschinen und Betrieben.

Weiterhin besitzen Pigmente den Nachteil, daß sie wegen ihrer Feinteiligkeit bei der Lagerung — insbesondere bei Zutritt von etwas Feuchtigkeit — zur Brückenbildung neigen.

Daher sind in Silos gelagerte Pigmentpulver schon nach kurzer Zeit nicht mehr frei fließend.

Sie lassen sich daher nur mit Mühe unter erheblichem apparativem und menschlichem Aufwand aus Silos wieder austragen.

Deswegen bereitet auch ihre Dosierung über Schnecken bzw. Vibrationsrinnen erhebliche Schwierigkeiten.

Im Stand der Technik wurden die bei Pigmentpulvern auftretenden Probleme des Staubens, der Lagerung im Silo (Silierung) und der automatischen Dosierung durch die Verwendung der Pigmente in Form wässriger Pigmentpasten im Betonbereich zu lösen versucht.

Solche Pasten enthalten meist etwa 70—30% Wasser als Trägermedium sowie oberflächenaktive Stoffe.

Die Vorteile, die solche wässrige Pigmentpasten gegenüber trockenen Pigmentpulvern aufweisen, werden jedoch mit erheblichen Nachteilen erkauft:

In der Praxis lassen sich die Pasten nicht in Silos bzw. anderen Großraumbehältern längere Zeit lagern, weil diese sich hierbei durch Absetzen entmischen und auch teilweise feste Ablagerungen bilden.

Wegen des hohen Wassergehaltes verdoppeln sich die Verpackungskosten für die wässrigen Pigmentpasten ebenso wie die Transporskosten. Ein bedeutender Nachteil besteht auch darin, daß solche Pasten überhaupt nicht einsetzbar sind, wenn die Eigenfeuchte von Sand und Aggregaten bei der Betonzubereitung schon so hoch ist, daß zusätzliche Zugaben von Wasser — auch in Form von wässrigen Pigmentpasten — die Betonkonsistenz in einem untragbaren Maße verschlechtern.

In den Bereichen Lack- und Kunststoffeinfärbung können die letztgenannten Nachteile grundsätzlich dadurch vermieden werden, daß man das Pigment nicht in Form von Pastan oder Pulvern, sondern in Form von Granulaten einsetzt.

Insbesondere bei gesundheïtsschädlichen Pigmenten werden Pigmentgranulate seit vielen Jahren in der Kunststoffindustrie eingesetzt.

Die FR—A—2,450,273 beschriebt kohlenstoffpigment-haltige, trockene, staubfreie Perlgranulate zum Einfärben von Zement mit einem Wassergehalt von 59%. Dieser FR—PS ist weder die Verwendung anderer Pigment als Gasruß noch der Einsatz der Granulate zum Färben von Beton zu entnehmen.

Herstellung und Einsatz von Granulaten sind grundsätzlich in vielen Bereichen alte Tradition (vgl. H. Rumpf in "Chemie-Ing.-Technik, 30, 1958, Nr. 3, Nr. 4, Nr. 5"; W. C. Peck in "Chemistry and Industry, Ausgabe vom 20.12.1958, Seiten 1674 FF"; zum Schmelzgranulieren siehe U. A. W. Boretsky in "Fette-, Seifen-, Anstrichmittel, Nr. 4, 1967").

So haben sich Brikettes im Kohle- und Erzbereich durchgesetzt; Mikrokapseln werden im Durchschriebpapier verwendet; im Agrarbereich findet sich das Futter in Form von Kompaktgranalien im Silo;

im Lacksektor lösen sich staubfreie Nitrozellulose-Pigmentkonzentrate in Lösungsmitteln einwandfrei auf;

im Kautschukbereich wird Ruß als Aufbaugranulat eingesetzt; und PVC wird in Form von gesprühtem Perlgranulat verwendet.

Dagegen ist die Einfärbung von Betonen mit Pigmentgranulat noch nicht Stand der Technik, denn Pigmentgranulate gemäß Stand der Technik, waren im Einfärbeprozeß nachteilig.

Die Scherkräfte im Beton während des Mischzyklus auf die Granulate sind zum Pigmentdispergieren zu gering. Dies bedeutet:

1. Die Pigmentgranulate bilden im Beton Stippen und Farbnester; diese machen sich als optische Fehler auf der Betonoberfläche bemerkbar.

2. Die im Vergleich zu Pulverpigmenten wesentlich schlechtere Dispergierung de Pigmente während des Mischzyklus im Betonmischer führt zu einer mangelhaften Ausnutzung der Farbkraft des Granulates. Dementsprechend muß eine höhere Menge an Pigmentgranulaten als an Pigmentpulver eingesetzt werden, um einen identischen Farbton in der Betonmischung zu erzielen.

3. Die Verwendung von bindemittelhaltigem Pigmentgranulat bringt Fremdstoffe in den Beton ein, ohne die nachteiligen Dispergierschwierigkeiten zu verbesern.

4. Im Beton findet sich nicht genügend Feuchte und Zeit, um bindemittelhaltige Granulate aufzulösen.

Dieser Nachteile wegen werden z. Zt. auch sprühgetrocknete Betonpigmente wieder über eine Mahlung in ihre Pulver überführt, bevor sie zur Einfärbung von Beton zum Einsatz kommen.

Der Erfindung liegt daher die Aufgabe zugrunde, ein Verfahren zum Einfärben von Beton zur Verfügung zu stellen, wodurch die Nachteile aus der Anwendung von Farbpulvern von wässrigen Pigmentpasten oder von Pigmentgranulaten gemäß Stand der Technik vermieden werden.

Diese Aufgabe wird erfindungsgemäß durch ein Verfahren gemäß Anspruch 1 sowie durch die Verwendung gemäß Anspruch 8 gelöst.

Die Herstellung geeigneter Pigmentgranulate ist gemäß Stand der Technik auf vielfältige Arten möglich, allerdings eignen sich Granulate aus Brikettier- und Kompaktierprozessen nicht für das erfindungsgemäße Verfahren, da hier Dispergierschwierigkeiten auftreten.

Aufbaugranulate sind geeignet.

Auch eignen sich feinteilige Granulate aus Trocknungsprozessen der Mischungen aus Pigmenten, Bindemitteln, Flüssigkeit, vorzugsweise Wasser und ggf. anderen Stoffen. Besonders geeignet sind Perlgranulate. Erstaunlicherweise wurde gefunden, daß sich obenerwähnte Granulate im Betonmischer gut auflösen. Daher sind sie im praktischen Gebrauch gut einsetzbar. Ferner verteilen sie sich homogen im Beton, so daß Sichtbeton ohne Stippen und Farbnester einwandfrei eingefärbt wird. Ihre Verwendung ist auch wirtschaftlich, da mit der gleichen Menge an im Granulat enthaltenem Pigment eine gleich tiefe Einfärbung erzielbar ist, wie die mit der entsprechenden Menge des Pigmentes in Pulverform.

Das erfindungsgemäß eingesetzte Granulat fließt frei aus einem Silo und läßt sich pneumatisch fördern.

Es ist in der Handhabung praktisch staubfrei. Hierbei ist das Perlgranulat in seiner Handhabbarkeit noch den anderen Granulatformen überlegen. Damit eignet sich das erfindungsgemäße Verfahren insbesondere zur automatischen, sauberen Einfärbung von Betonen.

Als Pigment werden z.B. Manganoxid, Eixenoxide und/oder organische Pigmente, gegebenenfalls in Mischung mit Kohlenstoff verwendet. Auch werden Mischungen der einzelnen Pigmente eingesetzt.

In dem erfindungsgemäß verwendeten Granulat, vorzugsweise Perlgranulat, wird das Pigment mit einem die Dispergierung des Pigmentes in Beton fördernden Bindemittel vermischt. Gegebenenfalls können zusätzlich andere Bindemittel, die in Beton nicht stören, eingesetzt werden. Zur Einfärbung sind in den Granulaten, vorzugsweise in den Perlgranulaten, die Kombinationen aus Pigment und den folgenden technisch verfügbaren, die Dispergierung der Pigmente in Beton fördernden Bindemitteln einsetzbar:

Alkylphenol, z.B. Igepal C$^R$;

ein Eiweißfettsäurekondensationsprodukt, z.B. Lamepon$^R$;

Alkylbenzolsulfonat, auch in Form seines Salzes, z.B. Marlon$^R$;

Alkylnaphtalinsulfonat, z.B. Necal BXR$^R$;

Ligninsulfonat, z.B. Sulfitablauge, z.B. Waldhoflauge$^R$;

sulfatierter Polyglycolether, z.B. ein solcher von Fettalkoholen oder Alkylphenolen oder sein Salz;

ein Melaminformaldehydkondensat, ein Naphtalinformaldehydkondensat, Gluconsäure, andere betonunschädliche Polyhydroxiverbindungen, Salze von niedrigmolekularen teilveresterten Styrolmaleinsäureanhydrid-Copolymerisaten und von Copolymeren aus Vinylacetat und Krotonsäure. Als Bindemittel besonders bevorzugt ist Ligninsulfonat, z.B. Ammoniumligninsulfonat.

Die Herstellung der für ds erfindungsgemäße Verfahren einsetzbaren Granulate kann auf vielfältige Weise erfolgen.

Als Aufbaugranulate werden sie vorzugsweise über übliche rotierende geeignete Granulierteller (z.B. der Fa. Eirich) durch Einspeisen der Pigmentpulver über Dosierschnecken und Eintropfen der in Wasser gelösen Bindemittel in den Teller, sowie Abtrennen der ca. 1 mm großen Granulate per Überlauf, sowie deren Trocknung hergestellt.

Statt eines Granuliertellers kann auch eine geneigte, rotierende Granuliertrommel (z.B. der Fa. Dela Granuliertechnik) zum Einsatz kommen. Sowohl im Granulierteller, als auch in der Trommel erfolgt eine Abrollbewegung der Pigmentteilchen, wobei sich diese miteinander verkleben und verfestigen.

In einer weiteren Ausführungsform können für das erfindungsgemäße Verfahren Granulate zum Einsatz kommen, die aus einem Trocknungsprozeß eines Gemisches aus Bindemittel, Pigment und Flüssigkeit, vorzugsweise Wasser und gegebenenfalls anderen Zusätzen, entstammen. Beispielsweise können solche Gemische in Pastenform in dünner Schicht auf einen Walzentrockner gebracht, getrocknet und zu Feingranulat zerkleinert werden.

Ein solches Gemisch kann auch in dünner Schicht auf einem Bandtrockner getrocknet und zu Feingranulat zerkleinert werden.

Die bevorzugte Granulatform für das erfindungsgemäße Verfahren ist das Perlgranulat.

Dieses wird über Sprühtrockner durch Einstoffoder Mehrstoffdüsen bzw. Zerstäuberscheiben in einem Sprühturm aus Gemischen von Pigment, Bindemittel und Flüssigkeit, vorzugsweise Wasser und gegebenenfalls anderen Zusatzstoffen hergestellt.

Die Perlgranulate fallen in Form von Mikrogranulaten an, wobei 90% der Pigmentteilchen eine Größe von 20 bis 500 Mikron, insbesondere eine Größe von 50 bis 300 Mikron besitzen.

Die Menge an eingesetztem Bindemittel, das die Dispergierung des Pigments im Beton fördert, beträgt 0,1 bis 15 Gew.-%, bezogen auf das Granulat, vorzugsweise 1 bis 8 Gew.-%, insbesondere 2 bis 6 Gew.-%.

Die Erfindung wird im folgenden anhand der Beispiele näher erläutert.

### Beispiel 1

Herstellung eines Eisenoxidschwarz enthaltenden Perlgranulats

Eine Suspension von 53 Gew.-% Eisenoxidschwarz und 2,0 Gew.-% Bindemittel (Hansa Am, ein pulverförmiges Ammoniumligninsulfonat der Lignin-Chemie Waldhof-Holmen GmbH), Rest Wasser, werden auf einer Sprühtrocknungsanlage mit Druckdüsenzerstäubung im Gegen/ Gleichstrom sprühgetrocknet.

Der Zerstäubungsdruck beträgt 13 bis 18 Bar, die Trocknungsluft-Eintrittstemperatur 280 bis 325°C und die Ablufttemperatur 115 bis 130°C.

Als Produkt wird ein grobes, rieselfähiges und staubfreies Perlgranulat mit einer Restfeuchte von 0,3 bis 1,3% und einem Schüttgewicht von 810 bis 820 g/l erhalten.

Das Perlgranulat hatte eine mittlere Korngröße von 150 bis 200 µm und besaß gute mechanische Stabilität.

### Beispiel 2

Herstellung eines Perlgranulates aus einer Eisenoxid und Kohlenstoff enthaltenden Pigmentdispersion

Aus einer wässrigen Suspension (slurry) aus
1,3 Teilen Ammonligninsulfonat
4,7 Teilen Kohlenstoffpigment
22 Teilen Eisenoxidgelb
22 Teilen Eisenoxidrot und
50 Teilen Wasser

werden auf dieselbe Weise wie im Beispiel 1, Perlgranulat hergestellt. Der Zerstäubungsdruck beträgt 11 bis 16 Bar, die Trocknungslufteintrittstemperatur beträgt 280 bis 300°C, die Ablufttemperatur ist 90 bis 110°C.

Das erhaltene Perlgranulat ist grob, rieselfähig und staubfrei.

Die Restfeuchte ist 2 bis 2,2%.

Das Schüttgewicht liegt bei 600 bis 650 g/l.

### Beispiel 3

In einem Betonmischer (Bauart Schlosser) mit 1 m³ Inhalt werden 1.560 kg Sand und erfindungsgemäß 18 kg Eisenoxidschwarz in Form seines Perlgranulates aus Beispiel 1 15 min. lang gemischt; danach werden 440 kg Portlandzement hinzugegeben und 15 min. lang mit der vorliegenden Mischung homogenisiert; dann wird der Mischer entleert. Die Mischung wird zum Herstellen von Betondachsteinen eingesetzt.

### Vergleichsbeispiel 1

Es wird verfahren wie in Beispiel 3.

Statt des erfindungsgemäßen Perlgranulates wird die gleiche Menge (18 kg) Eisenoxidschwarz in Pulverform eingesetzt.

Die feuchten Betone und die 24 h lang ausgehärteten Dachsteine werden farblich miteinander verglichen. Es werden keine signifikanten Unterschiede festgestellt.

### Beispiel 5

Es wird verfahren wie in Beispiel 3.

Zur Einfärbung werden jetzt 20 kg des braunen Perlgranulates aus Beispiel 2 eingesetzt.

### Vergleichsbeispiel 2

Es wird verfahren wie in Beispiel 3.

Zur Einfärbung werden jetzt 20 kg des Pulvergemisches aus den Einzelkomponenten der Pigmente wie in Beispiel 2 eingesetzt.

### Vergleichsbeispiel 3

Es wird verfahren wie in Beispiel 3.

Zur Einfärbung werden jetzt 40 kg der Pigmentsuspension eingesetzt, die in Beispiel 2 sprühgranuliert werden.

Außerdem wurde die der Betonmischung zugegebene Wassermenge von 100 kg auf 80 kg vermindert, um dem Wasser in der zugesetzten Pigmentsuspension Rechnung zu tragen.

### Ergebnis von Beispiel 5 und Vergleichsbeispielen 2 und 3

Die feuchten Betone sowie die 24 h lang ausgehärteten Dachsteine aus Beispiel 5 und den Vergleichsbeispielen 2 und 3, wurden farblich miteinander verglichen. Der erfindungsgemäß eingefärbte Beton und der Beton aus Vergleichsbeispiel 3 zeigen keine Unterschiede. Der Beton aus Vergleichsbeispiel 2 war deutlich inhomogener eingefärbt.

### Beispiel 6

In einem 1 m³ Betonmischer (Bauart Drais) werden mit 975 kg Sand und 580 kg Kies erfindungsgemäß 10 kg Eisenoxidschwarz in Form seines Perlgranulates aus Beispiel 1 10 sec. lang vermischt; danach werden 200 kg Portlandzement in die Mischung gegeben und 15 sec. lang homogenisiert; es werden dann 100 l Wasser unter weiterem Homogenisieren zudosiert.

Nach einer Gesamtmischzeit von 60 sec. wird der Mischer entleert. Die Betonmischung wird zur Herstellung von Betonverbundpflaster eingesetzt.

### Vergleichsbeispiel 4

Es wird verfahren wie in Beispiel 6.

Statt des erfindungsgemäßen Perlgranulates werden 10 kg Eisenoxidschwarz in Form seines Pulvers eingesetzt.

### Ergebnis von Beispiel 6 und Vergleichsbeispiel 4 Die feuchten Betone und die 28 d lang ausgehärteten Verbundsteine wurden miteinander farblich verglichen. Die erfindungsgemäß hergestellten Steine waren etwas dunkler und gleichmäßiger in der Einfärbung als mit Eisenoxidpulver eingefärbte Steine.

### Beispiel 7

Es wurde verfahren wie in Beispiel 6.

Erfindungsgemäß wurde unter Verwendung von 11 kg Perlgranulat aus Beispiel 2 eingefärbt.

Vergleichsbeispiel 5

Es wird verfahren wie in Beispiel 6.

Gemäß Stand der Technik wurde eingefärbt mit 22 kg Slurry, wie sie in Beispiel 2 zur Herstellung von Perlgranulat eingesetzt wurde. Statt 100 kg Wasser wurde 89 kg eingesetzt, um dem Wassergehalt der Slurry im Beton Rechnung zu tragen.

Ergebnis von Beispiel 7 und Vergleichsbeispiel 5

Der Vergleich je der zwei feuchten Betonmischungen und der 28 d lang ausgehärteten Steine miteinander, ließ Unterschiede in der Einfärbqualität nicht erkennen.

**Patentansprüche**

1. Verfahren zum Einfärben von Beton, wobei man als Färbemittel Pigmentgranulate, mit Ausnahme von Preß- und Brikettiergranulaten einsetzt, die aus einem oder mehreren Pigmenten mit Ausnahme von Kohlenstoffpigmenten allein sowie einem oder mehreren die Dispergierung der Pigmente im Beton fördernden Bindemittel und gegebenenfalls anderen Zusatzstoffen bestehen, dadurch gekennzeichnet, daß man Pigmentgranulate mit einem Wassergehalt nicht über 4,2% einsetzt.

2. Verfahren nach Anspruch 1, dadurch gekennzeichnet, daß die Pigmente Eisenoxide sind.

3. Verfahren nach Anspruch 1 oder 2, dadurch gekennzeichnet, daß die Dispergierung der Pigmente im Beton fördernden Bindemittel ein Alkylbenzolsulfonat, Alkylnaphthalinsulfonat, Ligninsulfonat, ein sulaftierter Polyglykoläther, Melaminformaldehydkondensat, Naphthalinformaldehydkondensat, Glukonsäure, eine andere betonunschädliche Polyhydroxy verbindung ein Salz eines niedrigmolekularen teilveresterten Styrol-Maleinsäureanhydrid-Copolymerisats und/oder ein Copolymeres aus Vinylacetat und Krotonsäure ist.

4. Verfahren nach Anspruch 1, 2 oder 3, dadurch gekennzeichnet, daß das Bindemittel ein Ligninsulfonat ist.

5. Verfahren nach einem der Ansprüche 1 bis 4, dadurch gekennzeichnet, daß die Granulate durch Aufbaugranulierung hergestellt wurden.

6. Verfahren nach einem der Ansprüche 1 bis 4, dadurch gekennzeichnet, daß die Granulate durch Trocknung eines Gemisches aus Pigment, Bindemittel und Flüssigkeit, vorzugsweise Wasser und gegebenenfalls anderen Zusatzstoffen, hergestellt wurden.

7. Verfahren nach einem der Ansprüche 1 bis 4 und/oder 6, dadurch gekennzeichnet, daß die Granulate durch Sprühgranulieren eines Gemisches aus Pigment, Bindemittel und Flüssigkeit, vorzugsweise Wasser und gegebenenfalls anderen Zusatzstoffen, hergestellt wurden.

8. Verwendung von Pigmentgranulaten mit Ausnahme von Preß- und Brikettiergranulaten, die aus einem oder mehreren Pigmenten mit Ausnahme von Kohlenstoffpigmenten allein sowie einem oder mehreren die Dispergierung der Pigmente im Beton fördernden Bindemittel(n) und gegebenenfalls anderen Zusatzstoffen bestehen und einen Wassergehalt nicht über 4,2% besitzen, zum Einfärben von Beton.

**Revendications**

1. Procédé de coloration du béton utilisant comme colorants des pigments en granulés à l'exception de granulés comprimés ou briquetés, qui se composent d'un ou plusieurs pigments à l'exception de pigments à base de carbone seul, d'un ou plusieurs liants favorisant la dispersion des pigments dans le béton et, éventuellement d'autres additifs, caractérisé par l'utilisation de pigments en granulés dont la teneur en eau est inférieure ou égale à 4,2%.

2. Procédé selon la revendication 1 caractérisé en ce que les pigments sont des oxydes de fer.

3. Procédé selon les revendications 1 ou 2 caractérisé en ce que les liants favorisant la dispersion des pigments dans le béton sont du sulfonate de benzène d'alkyle, du sulfonate de naphtaline d'alkyle, du sulfonate de lignine, de l'éther de polyglycol sulfaté, un condensat de mélamine-formaldéhyde, un condensat de naphtaline-formaldéhyde, de l'acide gluconique, un autre composé polydroxylé inoffensif à béton, un sel d'un copolymère styrène d'anhydride maléique à molécularité faible, partiellement estérifié et/ou d'un copolymère d'acétate vinylique et d'acide crotonique.

4. Procédé selon l'une des revendications 1 à 3 caractérisé en ce que le liant est du sulfonate de lignine.

5. Procédé selon l'une des revendications 1 à 4 caractérisé en ce que les granulés sont obtenus au moyen d'une granulation par agrégation.

6. Procédé selon l'une des revendications 1 à 4 caractérisé en ce que les granulés sont obtenus par séchage d'un mélange se composant de pigments, de liants, de liquide, de préférence de l'eau, et, en tant que de besoin, d'autres additifs.

7. Procédé selon l'une des revendications 1 à 4 et/ou la revendication 6 caractérisé en ce que les granulés sont obtenus au moyen d'une granulation par pulvérisation d'un mélange se composant de pigments, de liants, de liquide, de préférence de l'eau, et, en tant que de besoin, d'autres additifs.

8. Utilisation pour la coloration de béton de pigments en granulés à l'exception de granulés comprimés ou briquetés, qui sont constitués d'un ou plusieurs pigments à l'exception de pigments à base de carbone seul, d'un ou plusieurs liants favorisant la dispersion des pigments dans le béton et, en tant que de besoin, d'autres additifs, et qui possèdent une teneur en eau inférieure ou égale à 4,2%.

**Claims**

1. A method of dyeing concrete in which the dyeing agents are pigment granulates, except for compressed or briquetted granulates, comprising: one or more pigments, except for carbon pigments alone, and one or more binders promoting the dispersion of pigments in the concrete, and other additives if required, characterised by use of pigment granulates having a water content not exceeding 4.2%.

2. A method according to claim 1, characterised in that the pigments are iron oxides.

3. A method according to claim 1 or 2, characterised in that the binder for promoting the dispersion of pigments in the concrete is an alkylbenzene sulphonate, alkyl naphthalene sulphonate, lignin sulphonate, a sulphated polyglycol ether, melamine, formaldehyde condensate, naphthalene formaldehyde condensate, gluconic acid, another polyhydroxy compound which is not harmful to concrete, a salt of a low-molecular partly esterified copolymer of styrene and maleic acid anhydride and/or a copolymer of vinyl acetate an crotonic acid.

4. A method according to claim 1, 2 or 3, characterised in that the binder is a lignin sulphonate.

5. A method according to any of claims 1 to 4, characterised in that the granulates are built-up granulates.

6. A method according to any of claims 1 to 4, characterised in that the granulates are made by drying a mixture of pigment, binder and liquid, preferably water, with other additives if required.

7. A method according to any of claims 1 to 4 and/or 6, characterised in that the granulates are made by spray-granulating a mixture of pigment, binder and liquid, preferably water, and other additives if required.

8. Use of pigment granulates, except for compressed or briquetted granulates, comprising: one or more pigments, except for carbon pigments alone, and one or more binders promoting the dispersion of pigments in concrete and other additives if required and having a water content not exceeding 4.2%, for dyeing concrete.